Europäisches Patentamt

European Patent Office

Office européen des brevets

(11) Veröffentlichungsnummer: **0 012 818**
**B1**

(12) **EUROPÄISCHE PATENTSCHRIFT**

(45) Veröffentlichungstag der Patentschrift:
30.05.84

(21) Anmeldenummer: 79104342.5

(22) Anmeldetag: 06.11.79

(51) Int. Cl.³: **G 06 K 7/10**, G 06 K 7/14,
G 06 F 3/033, H 04 B 9/00

(54) **Anordnung zur Trennung eines optischen Signals von Umgebungslicht.**

(30) Priorität: 20.12.78 CH 12923/78

(43) Veröffentlichungstag der Anmeldung:
09.07.80 Patentblatt 80/14

(45) Bekanntmachung des Hinweises auf die Patenterteilung:
30.05.84 Patentblatt 84/22

(84) Benannte Vertragsstaaten:
DE FR GB

(56) Entgegenhaltungen:
DE - A - 2 208 606
DE - B - 1 797 327
DE - B - 2 352 817
GB - A - 1 469 880

(73) Patentinhaber: International Business Machines
Corporation, Old Orchard Road, Armonk, N.Y. 10504 (US)

(72) Erfinder: Bapst, Urs Heinrich, Friesenberghalde 3,
CH-Zürich (CH)
Erfinder: Gfeller, Fritz, Albisstrasse 88, CH-Adliswil/ZH
(CH)
Erfinder: Vettiger, Peter, Langmoosstrasse 3,
CH-Langnau/ZH (CH)

(74) Vertreter: Möhlen, Wolfgang C., Dipl.-Ing.,
Säumerstrasse 4, CH-8803 Rüschlikon (CH)

### Beschreibung

Die vorliegende Erfindung betrifft eine Anordnung zur Trennung eines optischen Signals vorgegebener Wellenlänge von Umgebungslicht, welche ein optisches Interferenzfilter aufweist mit einem der vorgegebenen Wellenlänge des optischen Signals entsprechenden Durchlassband.

Optische Signale, d. h. moduliertes Licht, können zur Informationsübertragung zwischen Geräten benutzt werden, wenn physische Verbindungen nicht erwünscht sind. Beispiele hierfür sind die Übertragung von Daten mittels Infrarotsignalen zwischen einer beweglichen Steuereinheit und einer festen Betriebseinheit, oder zwischen beweglichen Datenstationen (Terminals) und einer gemeinsamen Schalteinheit oder Anschlusseinheit eines festen Übertragungsnetzwerkes.

In solchen Anlagen pflanzt sich das optische Signal frei durch die Luft fort, und die Empfänger nehmen nicht nur das eigentliche Informationssignal auf, sondern auch Umgebungslicht, entweder Tageslicht oder künstliches Licht von Lampen. Um eine wirksame und fehlerfreie Übertragung zu erreichen, sollte dieses Umgebungslicht selbstverständlich unterdrückt oder vom gewünschten Signal im Empfänger getrennt werden.

Bekannte Systeme zur Verminderung der Umgebungslichtanteile haben meist Filter zur Grundlage. Der Artikel «Infrared detection system» von A.L. Bonyton und R.D. Holmes, erschienen im IBM Technical Disclosure Bulletin, Vol. 15, No. 5 (Oktober 1972), Seiten 1483 und 1484 beschreibt ein System zur Rückgewinnung eines schwachen Lichtsignals in Verhältnissen mit einem hohen Umgebungslicht-Pegel, zum Betrieb von Passagierschranken. In diesem System wurde die Umgebungslicht-Gleichstromkomponente durch optische Bandpassfilter reduziert, während der Wechselstromanteil durch elektrische Filterung vermindert wurde. Eine Veröffentlichung von R.L. Soderstrom «Ambient light rejection for laser scanners», IBM Technical Disclosure Bulletin, Vol. 17, No. 12 (Mai 1975) Seiten 3682 und 3683 offenbarte eine bestimmte Kombination von optischem Filter und Photoelektronenvervielfacher-Röhre zur Verminderung der Bandbreite eines empfangenen optischen Signals in einem Laser-Abtaster, durch welche auch die Umgebungslicht-Komponente verkleinert wird. In einem Artikel von F. Closs et al. «Wireless connection between a controller and a plurality of terminals», veröffentlicht im TBM Technical Disclosure Bulletin, Vol. 20, No. 7 (Dezember 1977), Seite 2843, wurde allgemein vorgeschlagen, ein optisches Interferenzfilter zur Beseitigung eines grossen Teils des Umgebungslichtes in einem Infrarotsignal-Übertragungssystem zu verwenden.

Die angeführten Systeme vermindern zwar das störende Umgebungslicht, welches ein breites Spektrum hat, durch Einschränkung des empfangenen Signals auf ein schmales Frequenzband, aber sie eliminieren nicht den Umgebungslichtanteil aus diesem Band. Es verbleibt also das Problem, innerhalb dieses Bandes ein möglicherweise schwaches Datensignal von einer starken Umgebungslicht-Komponente zu unterscheiden, insbesondere bei schnellen Änderungen, z. B. infolge des Einschaltens von Lampen oder infolge von Blitzlichtern.

In der Veröffentlichung «Spectrophotometric noise cancellation» von C.A. Pillus und L.D. Thorp, IBM Technical Disclosure Bulletin, Vol. 19, No. 6 (November 1976) Seiten 2185 und 2186 wurde vorgeschlagen, das Rauschen einer Lichtquelle in einem Spektrophotometer dadurch zu reduzieren, dass man ein unmoduliertes, von der Lichtquelle abgenommenes Referenzsignal vom modulierten Signal abzieht. Umgebungslicht-Rauschen kann aber mit der offenbarten Methode nicht kompensiert werden.

Aus der DE-A-2'208'606 ist zur Fernidentifizierung von Objekten, die eine codierte Information tragen, eine Anordnung nach dem Oberbegriff des Anspruchs 1 bekannt, die zur Beseitigung von Rauschen eine Multispektralbehandlungsschaltung aufweist, in der durch eine Filteranordnung ein optisches Bündel in zwei Bündel aufgeteilt wird, die dann in elektrische Signale umgesetzt und miteinander verarbeitet werden. Diese Anordnung hat aber den Nachteil, dass sie zwei Durchlassfilter benötigt, deren Spektralbereiche genau aufeinander abgestimmt sein müssen (komplementäre Durchlassbereiche). Auch wird ein zusätzlicher halbdurchlässiger Spiegel benötigt. Weiterhin wird dem Rauschen im Durchlassbereich des einen Filters das gesamte Rauschen des komplementären Bereichs gegenübergestellt. Zwar erfolgt ein Amplitudenabgleich, der aber dann fest ist und nur für eine gegebene Rauschverteilung optimal. Tritt nun z. B. eine temporäre Störung im inversen Bereich bei einer ganz anderen Wellenlänge als im Durchlassbereich auf, so entsteht statt einer Kompensation dieser Störung die gegenteilige Wirkung.

Die GB-A-1'469'880 beschreibt einen optischen Lesekopf, mit dem Zeichen auf einem zu lesenden Dokument mittels Lichtleitfaser durch Licht einer bestimmten Wellenlänge bestrahlt werden, wobei das reflektierte Licht sowie durch Fluoreszenz entstandenes Licht durch eine andere Lichtleitfaser zu einer Auswertevorrichtung zurückgegeben wird. Bei der Auswertevorrichtung wird das gewünschte Fluoreszenzlicht ausgefiltert. Dabei wird aber keine Kompensation von Umgebungslichtanteilen im Passband des betreffenden Filters vorgenommen.

Aus der DE-B-1'797'327 ist ein Gerät zur Messung des optischen Reflexionsvermögens bzw. der Durchlässigkeit von Objekten bekannt, bei dem die von einer Lichtquelle herrührende Strahlung durch das Objekt geleitet wird und die so erhaltene Strahlung durch einen olichroitischen Spiegel bzw. Filter in zwei unterschiedliche Komponenten aufgeteilt wird. Diese Komponenten liegen in zwei schmalen, voneinander verschiedenen Bändern, und ihr Verhältnis wird in einer Auswerteschaltung festgestellt, um so auf das Material des Objektes zu schliessen. Die Anordnung eignet sich nicht zur Kompensation von Umgebungslicht.

Der Erfindung liegt die Aufgabe zugrunde, eine Anordnung anzugeben, mittels deren Umgebungslicht, das zusammen mit einem optischen Signal empfangen wurde, nahezu vollständig eliminiert werden kann, vor allem auch in einem schmalen Durchlassband für das optische Signal.

Insbesondere ist es ein Ziel der Erfindung, eine Umgebungslicht-Kompensationsanordnung anzugeben, durch die Umgebungslichtanteile wechselnder und stark intensitätsschwankender Quellen kompensiert werden.

Erfindungsgemäss werden diese Ziele erreicht durch eine Anordnung gemäss dem Patentanspruch 1. Vorteilhafte Ausgestaltungen der Erfindung sind in den Ansprüchen 2 und 3 dargestellt.

Die Anordnung hat den Vorteil, dass bei mässigen Ansprüchen bereits mit einem einzelnen Interferenzfilter und einigen zusätzlichen preiswerten Elementen eine erhebliche Reduktion des Umgebungslichtes innerhalb des Signal-Durchlassbandes möglich ist. Eine fast vollständige Kompensation auch bei sehr sprunghaften Umgebungslichtverhältnissen lässt sich mit Filtern und Photodioden höherer Qualität erreichen. Eine Umgebungslicht-Kompensationsordnung gemäss Erfindung kann auch in so kompakter Form gebaut werden, dass sie in handgeführte Geräte eingebaut werden kann, z. B. in ein stiftförmiges Abtastgerät, in dem das Licht zur Beleuchtung eines Dokumentes und das reflektierte Licht (Abtastsignal) durch optische Fasern geleitet werden.

Ausführungsbeispiele der Erfindung werden im folgenden anhand von Zeichnungen beschrieben. Es zeigen:

Fig. 1 eine prinzipielle Anordnung der optischen Elemente in einem Ausführungsbeispiel der Erfindung;

Fig. 2 ein schematisches Diagramm der ursprünglichen, übertragenen und reflektierten Anteile von optischem Signal und Umgebungslicht zur Veranschaulichung der Funktion der beteiligten optischen Elemente;

Fig. 3 Spektralverteilungsdiagramme zur Darstellung der Verhältnisse zwischen ursprünglichem, übertragenem und reflektiertem Anteil von Umgebungslicht und optischem Signal,

Fig. 4 eine einfache Ausführungsform der elektrischen Schaltung zur Kompensierung der Umgebungslichtkomponente im Durchlassband,

Fig. 5 eine andere Ausführungsform der elektrischen Kompensationsschaltung, welche eine automatische Anpassung zwischen Signalen bewirkt, welche den übertragenen und den reflektierten Anteil des Umgebungslichts darstellen;

Fig. 6 eine Anordnung der optischen Elemente in einem anderen Ausführungsbeispiel der Erfindung, welches für optische Fasertechnik geeignet ist; und

Fig. 7 die schematische Darstellung eines Handstift-Abtastgeräts, in dem eine Anordnung ähnlich der von Fig. 6 eingebaut ist.

Prinzip des Gerätes zur Umgebungslicht-Unterdrückung

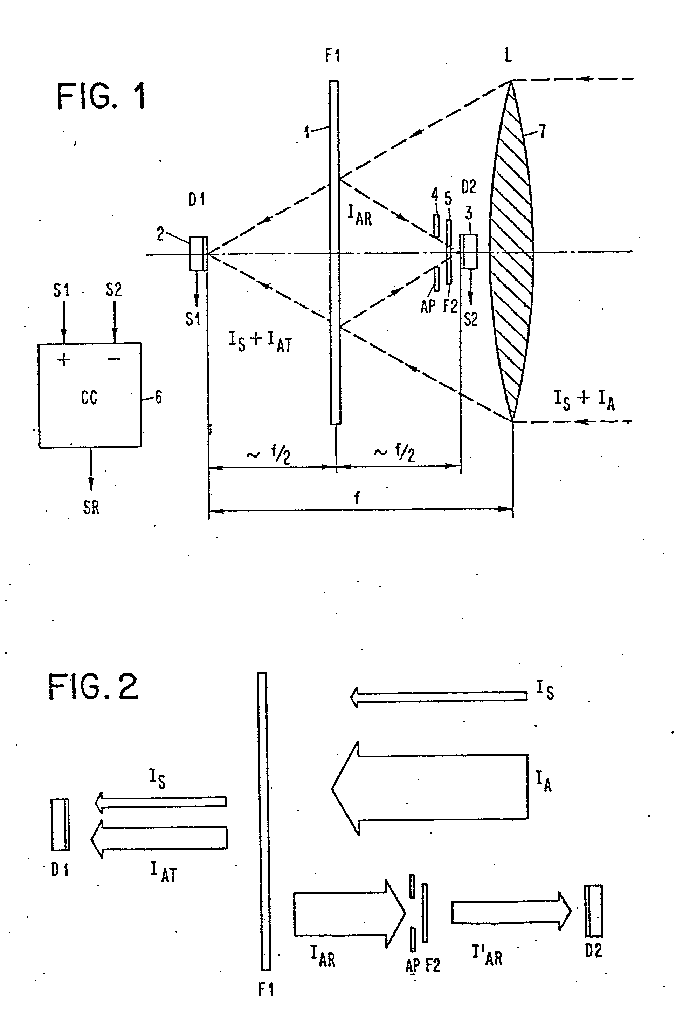

Die prinzipielle Anordnung eines Gerätes zur Umgebungslichtunterdrückung gemäss Erfindung ist in Fig. 1 gezeigt. Im wesentlichen enthält die Anordnung ein Interferenzfilter F1 (1), zwei lichtempfindliche Elemente D1 und D2 (2 und 3), Anpasseinrichtungen in der Form einer verstellbaren Blende AP (4) und eines zweiten Filters F2 (5), sowie eine elektrische Kompensationsschaltung CC (6), deren Eingänge mit den Ausgängen der photoempfindlichen Elemente, z. B. Photodioden D1 und D2, verbunden sind.

Ein Fokussierelement in Form einer Linse L (7) ist im Ausführungsbeispiel auch enthalten, braucht aber nicht vorgesehen werden, wenn das Licht für dieses Gerät in konzentrierter Form, z. B. über eine optische Faser, eintrifft.

Das Interferenzfilter F1 hat ein sehr schmales Durchlassband, welches der Wellenlänge des optischen Signals $I_S$ entspricht, das durch dieses Gerät vom Umgebungslicht getrennt werden soll. Für Infrarotsignalübertragung beträgt die Mittenfrequenz dieses Bandes ungefähr 900 nm.

Die Photodiode D1 ist im Brennweitenabstand f von der Linse angeordnet, Photodiode D2 nahe beim Mittelpunkt der Linse, und Interferenzfilter F1 in der Mitte von beiden. Blende AP und zweites Filter F2 sind zwischen dem Filter F1 und der Photodiode D2 angebracht.

Diese räumlichen Beziehungen müssen nicht eingehalten werden, wenn sich das Licht durch einen Wellenleiter fortpflanzt, so dass keine Linse erforderlich ist. In einem solchen Falle können beliebige Abstände gewählt werden, was aus einem weiter unten beschriebenen Ausführungsbeispiel ersichtlich wird.

Die Anordnung hat folgende Arbeitsweise, wie auch aus den Abbildungen Fig. 1 und 2 klar wird: Ein optisches Signal $I_S$ sowie starkes Umgebungslicht $I_A$ erreichen gemeinsam das Filter F1 von rechts. Das Signal $I_S$ gelangt vollständig zur Photodiode D1, weil seine Wellenlänge dem Durchlassband des Interferenzfilters F1 entspricht. Das Umgebungslicht wird in zwei Teile aufgeteilt. Der erste Anteil $I_{AT}$ liegt innerhalb des Durchlassbandes und wird durch das Filter F1 zur Photodiode D1 übertragen. Dieser Anteil würde, wenn er nicht kompensiert wird, das optische Signal stark stören. Ein zweiter Anteil $I_{AR}$ des Umgebungslichtes wird vom Filter F1 zur Photodiode D2 reflektiert. Infolge Dämpfung und Bandbreitenbegrenzung durch die Blende AP und das zweite Filter F2 erreicht nur ein reduzierter Anteil $I'_{AR}$ des reflektierten Umgebungslichtes die Photodiode D2. Das Filter F2 und die Öffnung der Blende AP werden so gewählt, dass die Umgebungslicht-Anteile $I_{AT}$ und $I'_{AR}$ ungefähr das gleiche Ausgangssignal bei den Photodioden D1 und D2 bewirken. Intensitätsschwankungen des Gesamt-Umgebungslichtes $I_A$ bewirken proportionale Änderungen des übertragenen Anteils $I_{AT}$ und des reflektierenden Anteils $I'_{AR}$.

Die elektrischen Ausgangssignale S1 und S2 der Photodioden D1 und D2 werden in der Kompensationsschaltung CC voneinander subtrahiert, so dass sich die vom Umgebungslicht hervorgerufenen Anteile einander aufheben, während das Ausgangssignal SR im wesentlichen nur vom eigentlichen optischen Signal $I_S$ abhängt.

Der Kompensationsvorgang kann formal folgendermassen beschrieben werden:

$$i_1 = S (I_{AT} + I_S)$$

$$i_2 = k \cdot S \cdot I_{AR}$$

$$\begin{aligned}\triangle i = i_1 - i_2 &= S (I_{AT} - kI_{AR}) + SI_S \\ &= S (\triangle I_{AT} + I_S)\end{aligned}$$

In diesen Gleichungen sind $i_1$ und $i_2$ die Ströme durch die Photodioden D1 bzw. D2, S ist die Empfindlichkeit der Photodioden, und k ist ein Anpassungsfaktor, welcher durch die Öffnung der Blende, durch das zweite Filter F2, oder durch sonstige Vorrichtungen zur Anpassung des Lichtpegels an der Photodiode D2 bestimmt wird. Mit Hilfe des Faktors k kann der Ausdruck $(I_{AT} - k \cdot I_{AR}) = \triangle I_{AT}$ minimisiert werden.

Es sei angemerkt, dass Schrotrauschen, welches in den Photodioden D1 und D2 durch die Umgebungslichtanteile $I_{AT}$ und $I'_{AR}$ hervorgerufen wird, nicht kompensiert wird, wohl aber rasche Intensitätsschwankungen, welche durch das Ein- und Ausschalten von Lampen sowie durch höhere Harmonische des Netzbrumms hervorgerufen wurden, auch wenn deren elektrische Frequenzanteile innerhalb des Frequenzbandes des die Daten darstellenden elektrischen Ausgangssignales liegen. Der erreichbare Grad der Kompensation hängt von der Korrelation der Intensitätsschwankungen der jeweiligen Umgebungslichtquelle in den beiden optischen Durchlassbereichen von $I_{AT}$ und $I'_{AR}$ ab.

In einer kurzen Testoperation vor dem eigentlichen Betrieb des Gerätes kann die Blendenöffnung so eingestellt werden (und, wenn ein auswechselbares Filter F2 vorgesehen ist, kann ein solches Filter ausgewählt werden), dass eine optimale Kompensation des Umgebungslichts unter den jeweiligen Lichtverhältnissen erreicht wird. Etwaige Unterschiede in den Kennlinien (Empfindlichkeiten) der Photodioden D1 und D2 können auf diese Weise auch ausgeglichen werden.

Eine alternative oder zusätzliche Möglichkeit zur Anpassung von Signalen in der Anordnung kann durch einen einstellbaren elektrischen Verstärker oder ein Dämpfungsglied für das Signal S2 in der Kompensationsschaltung CC vorgesehen werden.

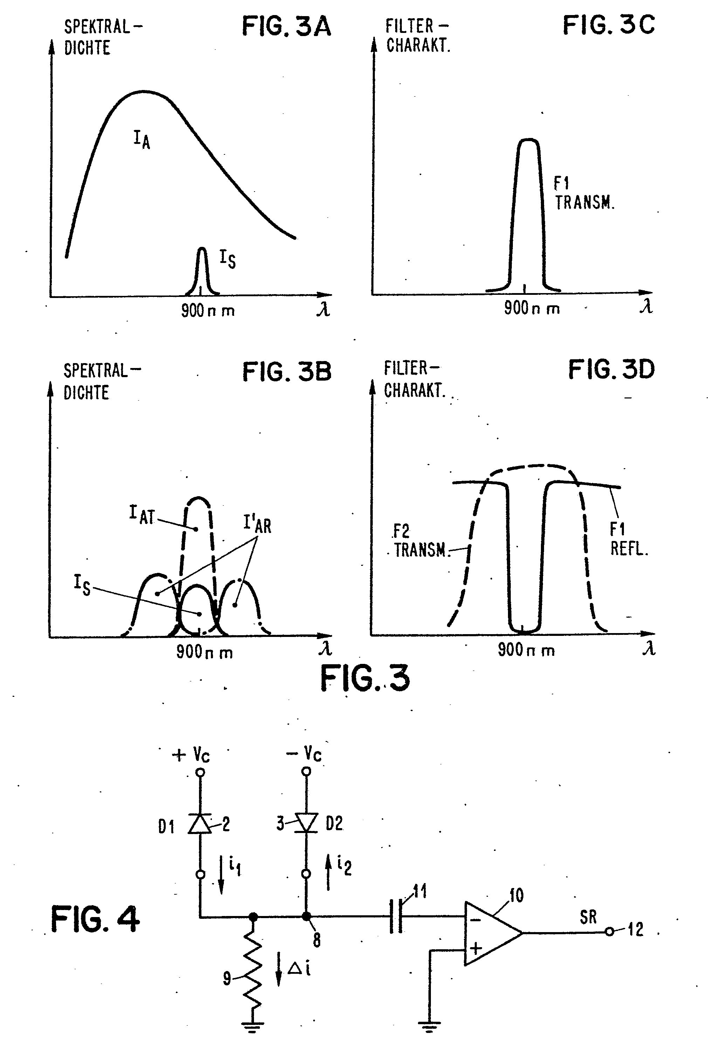

Die Spektraldiagramme und Filterkennlinien der Fig. 3 dienen zur weiteren Veranschaulichung der Arbeitsweise dieser Anordnung zur Umgebungslichtkompensation. Fig. 3A zeigt die Beziehungen zwischen den Spektraldichten des relativ schwachen optischen Signals $I_S$ schmaler Bandbreite sowie des starken und relativ breitbandigen Umgebungslichtes $I_A$. Fig. 3B zeigt die resultierenden Spektraldichten nach Durchgang des Lichtes durch das Filter F1 ($I_S$ und $I_{AT}$), bzw. nach Reflexion durch das Filter F1 und Durchgang durch die Blende und das Filter F2 ($I'_{AR}$). Man sieht, dass die beiden seitlichen Spektralbänder $I'_{AR}$, deren Intensität mittels des Filters einstellbar ist, zur Kompensation des mittleren Spektralbandes $I_{AT}$ benutzt werden können. Es sei darauf hingewiesen, dass der Abszissenmassstab in Fig. 3B gedehnt ist, um die Verhältnisse deutlicher zu zeigen.

Fig. 3C zeigt die Filterkennlinie von F1, ein schmales Durchlassband. Fig. 3D zeigt sowohl die Reflexionscharakteristik des Filters F1, welche das Komplement der Kennlinie von Fig. 3C ist, als auch die Filterkennlinie von F2 (gestrichelt), die ein etwas breiteres Durchlassband darstellt, welches das schmale Durchlassband von F1 einschliesst. Während das Interferenzfilter F1 von relativ guter Qualität entsprechend dem gewünschten Kompensationsgrad sein sollte, kann das Filter F2, welches nur zur groberen Durchlassbandbegrenzung dient, ein relativ einfaches und billiges Filter niedrigerer Qualität sein, z. B. ein Stück unbelichteten aber entwickelten Farbfilms. In diesem Fall ergibt die Hochpasscharakteristik des Films zusammen mit der Tiefpasscharakteristik der Photodiode D2 die erwünschte Bandpassfunktion. In einer Alternativausführung könnte das Filter F2 auch ein Interferenzfilter sein mit einem Durchlassband, das ungefähr die gleiche Bandbreite wie das Filter F1 hat, aber eine verschobene Mittenfrequenz.

Als Alternative für die Blende AP könnte ein neutrales Dichtefilter zur Einstellung der Intensität des reflektierten Lichtes an der Diode D2 vorgesehen werden.

Elektrische Kompensationsschaltung

Die prinzipielle Anordnung einer Ausführungsform der elektrischen Kompensationsschaltung CC (6) ist in Fig. 4 dargestellt. Photodioden D1 (2) und D2 (3) sind gegenpolig mit einem gemeinsamen Punkt 8 der Schaltung verbunden, während ihre anderen Enden mit einer positiven Versorgungsspannung $+V_c$ bzw. mit einer negativen Versorgungsspannung $-V_c$ verbunden sind. Der gemeinsame Punkt 8 ist über einen Widerstand 9 mit Masse verbunden und über eine Kapazität 11 mit einem der Eingänge eines Differenzverstärkers 10. Der andere Eingang des Differenzverstärkers ist mit Masse verbunden. Im Betrieb werden die Signale S1 und S2 (Fig. 1), die in Fig. 4 durch einen positiven Strom $i_1$ und einen negativen Strom $i_2$ dargestellt sind, im Widerstand 9 voneinander subtrahiert. Der Differenzstrom $\triangle i$ und der resultierende Spannungsabfall sind proportional zum optischen Signal $I_S$. Demnach ist auch das Signal SR, das am Ausgang 12 des Verstärkers 10 zur Verfügung steht, proportional zum Signal $I_S$ und hat keine vom Umgebungslicht abhängige Komponente.

Automatisch ausgleichende Kompensationsschaltung

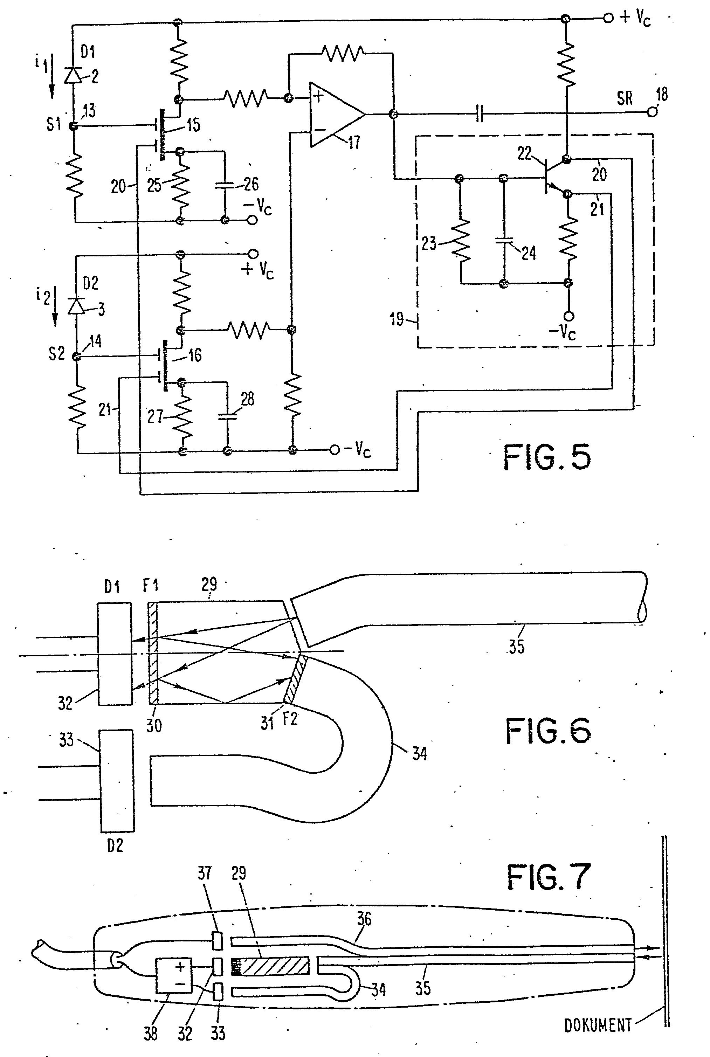

In Fig. 5 ist eine andere Ausführungsform der Kompensationsschaltung CC gezeigt, welche automatisch langsame (d. h. niederfrequente) Schwankungen des Umgebungslichtes ausgleicht und damit ein Mittel zur elektronischen Einstellung des weiter oben erwähnten Anpassungsfaktors k darstellt.

Die Photodioden D1 (2) und D2 (3) sind mit den Eingangsanschlüssen 13 bzw. 14 verbunden. Die Signale S1 und S2 werden durch die Feldeffekttransistoren 15 bzw. 16 zu den Komplementäreingängen eines Differenzverstärkers 17 übertragen. Der Ausgang dieses Verstärkers gibt ein kompensiertes Ausgangssignal SR zum Ausgang 18, welches unabhängig vom Umgebungslicht ist und nur das empfangene optische Datensignal darstellt. Die beiden Feldeffekttransistoren 15 und 16 haben je zwei Gate-Elektroden. Der Strom durch solch einen FET kann mittels zweier verschiedener Steuersignale gesteuert werden, die an je eine der beiden Gate-Elektroden angelegt werden. Die Ströme der beiden Feldeffekttransistoren werden im zeitlichen Mittel auf gleichem Pegel gehalten durch ein Netzwerk 19, das mit dem Ausgang des Differenzverstärkers 17 verbunden ist und über die Leitungen 20 und 21 zwei Rückkopplungssignale an die zweiten Gate-Elektroden der Feldeffekttransistoren 15 bzw. 16 abgibt. Das Netzwerk 19 enthält einen Bipolartransistor 22, dessen Kollektor über einen Widerstand mit der positiven Versorgungsspannung $+V_c$ und dessen Emitter über einen Widerstand mit der negativen Versorgungsspannung $-V_c$ verbunden ist. Seine Basis ist an den Ausgang des Differenzverstärkers 17 angeschlossen. Die Rückkopplungsleitungen 20 und 21 sind an Kollektor bzw. Emitter angeschlossen. Eine Parallelschaltung von Widerstand 23 und Kapazität 24 ist zwischen der Basis und der negativen Versorgungsspannung $-V_c$ vorgesehen.

Infolge des RC-Gliedes beeinflussen nur niederfrequente Komponenten vom Ausgangssignal des Differenzverstärkers 17 den Strom durch Bipolartransistor 22. Im Betrieb bewirken die Rückkopplungssignale auf Leitung 20 und 21 eine Steuerung der Feldeffekttransistoren 15 und 16 in der Weise, dass der niederfrequente Anteil des Ausgangssignals des Differenzverstärkers gegen Null geht. Demnach werden langsam sich ändernde Unterschiede zwischen den Anteilen $I_{AT}$ und $I_{AR}$, z. B. als Folge einer Änderung der Spektraldichteverteilung, durch diese Schaltung ausgeglichen. Die Schaltung gleicht auch unterschiedliche Flächen oder Empfindlichkeiten der beiden Photodioden aus.

RC-Glieder 25, 26 und 27, 28 sind zwischen den Source-Elektroden der Feldeffekttransistoren 15 bzw. 16, und der negativen Versorgungsspannung $-V_c$ vorgesehen zur stabilen Arbeitspunkteinstellung mittels Gleichstromgegenkopplung.

Ausführungsbeispiel mit optischen Fasern

Eine Ausführungsform der Umgebungslicht-Unterdrückungseinrichtung, welche mit optischen Fasern arbeitet, ist in Fig. 6 gezeigt. Diese Anordnung enthält einen Glasblock 29, mit dem ein Interferenzfilter 30 (F1) sowie ein weiteres Filter 31 (F2) verbunden sind. Ausser den Photodioden 32 (D1) und 33 (D2) ist ein kurzes optisches Faserbündel 34 zwischen dem Filter F2 und der Photodiode D2 vorgesehen. Während die eine Seite des Glasblocks, mit welcher Filter F1 verbunden ist, eine Stirnfläche hat, die senkrecht zur Achse des Glasblockes liegt, hat die andere zwei Stirnflächen, die gegen die Glasblockachse geneigt sind. Mit einer dieser Stirnflächen ist Filter F2 verbunden, an welchem das kurze optische Faserbündel 43 angebracht ist. Ein weiteres optisches Faserbündel 35 ist an der anderen Stirnfläche angebracht.

Dieses zweite optische Faserbündel 35 transportiert das optische Signal $I_S$ und die Umgebungslichtkomponente $I_A$, die an einem Punkt oder auf einer Teilstrecke des Übertragungspfades eingefangen wurde, wo sich das optische Signal $I_S$ nicht durch eine Faser, sondern frei durch die Luft bewegte. Das optische Signal und das Umgebungslicht gelangen durch den Glasblock 29 zum Interferenzfilter F1, welches hier die gleiche Wirkung hat, wie es im Zusammenhang mit Fig. 1 beschrieben wurde. Während das optische Signal $I_S$ und der Umgebungslichtanteil $I_{AT}$ durch das Filter hindurch zur Photodiode D1 übertragen werden, wird ein anderer Anteil $I_{AR}$ des Umgebungslichtes vom Filter F1 reflektiert. Weil die beiden Stirnflächen auf der anderen Seite des Glasblocks gleiche Winkel mit dessen Achse einschliessen, fällt das reflektierte Licht auf die Stirnfläche mit dem Filter F2. Der gefilterte Anteil $I_{AR}$ des Umgebungslichtes breitet sich weiter aus durch das optische Faserbündel 34 zur Photodiode D2.

Das Filter F2 könnte auch zwischen der Photodiode 33 (D2) und dem Faserbündel 34 angebracht werden. In diesem Falle kann ein unbelichteter entwickelter Farbfilm (wie weiter oben erklärt) oder ein auf ein separates Glasplättchen aufgedampftes Filter verwendet werden. Ausserdem kann ein Dämpfungselement zwischen Photodiode D2 und Faserbündel 34 eingesetzt werden. Als weitere Alternative können der Abstand (Luftspalt) oder die achsiale Ausrichtung zwischen den beiden einstellbar gemacht werden.

Die ganze Anordnung könnte z.B. in einem handgeführten Stift untergebracht werden, der zum Abtasten von Preisetiketten benützt wird, wie es schematisch in Fig. 7 gezeigt ist. Ein zusätzliches Faserbündel 36 mit einer Leuchtdiode oder einem Laser 37 am einen Ende wird zur Beleuchtung benutzt, während das optische Faserbündel 35 das vom Preisetikett reflektierte Licht plus Umgebungslicht aufnimmt. Eine elektrische Kompensationsschaltung 38, welche an die Photodioden D1 und D2 (32 und 33) angeschlossen wird, kann auch in den handgeführten Abtaststift eingebaut werden, der damit ein vollständiges Abtastgerät einschliesslich Umgebungslicht-Unterdrückung bildet.

Resultate

Es wurde eine Einrichtung beschrieben, mit der Umgebungslicht wirksam von einem optischen Datensignal getrennt werden kann. Im Gegensatz zu bisher bekannten Kompensationsmethoden erlaubt die vorliegende Erfindung eine Reduktion der Umgebungslicht-Komponente insbesondere im schmalen Frequenzband des optischen Datensignals.

Sie ist sehr geeignet zur Beseitigung von Störungen infolge rascher Veränderungen der Umgebungs-Lichtverhältnisse, z. B. durch Ein-/Ausschalten von Lampen oder durch Blitzlichter, und sie ist besonders nützlich für optische Übertragungssysteme, in denen die übertragenen Daten eine niedrige Grundfrequenz (Basisband) haben, oder die eine FM-Trägerfrequenz unter 100 kHZ haben.

Versuche mit einer Anordnung, die zwei Interferenzfilter F1 und F2 mit unterschiedlichen Mittenfrequenzen aufwies, zeigten, dass folgende Umgebungslichtreduktionen $R = \triangle I_{AT}/I_{AT}$ erwartet werden können (Definition von $\triangle I_{AT}$ siehe weiter vorn): Für Glühlampen $R = 1:740$, für Fluoreszenzlampen $R = 1:40$, und für Blitzlampen (Spitzenunterdrückung) $R = 1:32$.

### Patentansprüche

1. Anordnung zur Trennung eines optischen Signals vorgegebener Wellenlänge von Umgebungslicht, mit einer optischen Interferenzfilteranordnung, welche auftreffendes und aus dem optischen Signal ($I_S$) und Umgebungslicht ($I_A$) sich zusammensetzendes Licht in zwei Komponenten aufspaltet, von denen die erste ($I_S + I_{AT}$) in einem der vorgegebenen Wellenlänge des optischen Signals entsprechenden Durchlass-Spektralband und die zweite ($I_{AR}$) im dazu inversen Spektralbereich liegt; mit einer ersten und einer zweiten lichtempfindlichen Einrichtung (2, 3), die so angeordnet sind, dass sie die erste bzw. die zweite von der Interferenzfilteranordnung abgegebene Lichtkomponente empfangen; mit einer Schaltungseinrichtung (6, Fig. 1; 17, Fig. 5) zur Bildung eines Differenzsignals (SR) aus den Ausgangssignalen (S1, S2) der ersten und der zweiten lichtempfindlichen Einrichtung; sowie mit Einrichtungen (4, 5, Fig. 1; 19, Fig. 5) zur Anpassung des Verhältnisses zwischen den von der ersten und zweiten lichtempfindlichen Einrichtung abgegebenen Ausgangssignalen derart, dass im Differenzsignal der vom Umgebungslicht ($I_A$) in der ersten Komponente herrührende Anteil ($I_{AT}$) kompensiert wird, dadurch gekennzeichnet,
— dass die Interferenzfilteranordnung aus einem einzigen Interferenzfilter (1) besteht, von dem einerseits das durchgelassene Licht ($I_S + I_{AT}$) als erste Komponente uns andererseits das reflektierte Licht ($I_{AR}$) als zweite Komponente zu den beiden lichtempfindlichen Einrichtungen (2, 3) weitergeleitet werden, und
— dass eine Filteranordnung (5) zwischen Interferenzfilter (1) und zweitem lichtempfindlichem Element (3) vorgesehen ist derart, dass sich als Ausgangssignal der zweiten lichtempfindlichen Einrichtung (3) ein Signal ergibt, welches einem eng begrenzten Spektralbereich (Fig. 3D) entspricht, der einen oder beide der dem Durchlass-Spektralband des Interferenzfilters unmittelbar benachbarten Bereiche einschliesst.

2. Anordnung nach Anspruch 1, dadurch gekennzeichnet, dass bei der Schaltungseinrichtung (17) zur Bildung des Differenzsignals eine Ausgleichsschaltung (19) mit Rückkopplungsverbindung (20, 21) nachgeschaltet ist, mit deren Hilfe die Pegel der Ausgangssignale der lichtempfindlichen Einrichtungen (2, 3) so angepasst werden, dass sich deren Gleichstromanteile und niederfrequente Anteile kompensieren.

3. Anordnung nach Anspruch 2, dadurch gekennzeichnet, dass die Ausgleichsschaltung (19) das von der Schaltungseinrichtung (17) zur Bildung des Differenzsignals abgegebene Signal (SR) auswertet und über Rückkopplungsverbindungen (20, 21) Steuersignale an zwei getrennte Eingangsverstärker (15, 16) der Schaltungseinrichtung zur Bildung des Differenzsignals abgeben, denen andererseits die Ausgangssignale (S1, S2) der beiden lichtempfindlichen Einrichtungen (2, 3) zugeführt werden.

### Claims

1. Device for separating an optical signal of a given wavelength from ambient light, comprising: an optical interference filter arrangement separating impinging light which consists of the optical signal ($I_S$) and ambient light ($I_A$) into two components one of which ($I_S + I_{AT}$) is included in a transmission spectral band corresponding to the given wavelength of the optical signal, and the other of which ($I_{AR}$) is included in the inverse spectral range; first and second photo detector means (2, 3) so arranged that they receive the first and the second light component, respectively, furnished by said interference filter arrangement; circuitry (6, Fig. 1; 17, Fig. 5) for generating a difference signal (SR) from the two output signals (S1, S2) of said first and second photo detector means, respectively; and means (4, 5, Fig. 1; 19, Fig. 5) for adjusting the relation between the output signals furnished by said first and second photo detector means in such a way that in the difference signal, that portion ($I_{AT}$) of the first component which is due to the ambient light ($I_A$) is compensated; characterized in that
— said interference filter arrrangement consists of a single interference filter (1) of which, on one hand, the transmitted light ($I_S + I_{AT}$) is transferred as first component and of which, on the other hand, the reflected light ($I_{AR}$) is transferred as second component to said two photo detector means (2, 3), and
— filter means (5) are provided between said interference filter (1) and the second photo detector means (3) so that as output signal of said second photo detector means (3) a signal is obtained which corresponds to a narrow spectral range (Fig. 3D) which includes one or both of the ranges immediately adjacent to said transmission band of said interference filter.

2. Device in accordance with claim 1, characterized in that in connection with said circuitry (17) for generating a difference signal, compensating circuitry (19) including feedback paths (20, 21) is provided, with the aid of which the level of the output signals of said photo detector means (2, 3) can be so adjusted that their DC components and low frequency components are compensated.

3. Device in accordance with claim 2, characterized in that said compensating circuitry (19) evaluates the signal (SR) furnished by said circuitry (17) for generating a difference signal, and provides control signals over feedback connections (20, 21) to two separate input amplifiers (15, 16) of said circuitry for generating a difference signal, to which on the other hand the output signals (S1, S2) of said two photo detector means (2, 3) are provided.

### Revendications

1. Dispositif pour séparer un signal optique, de longueur d'onde prédéterminée, de la lumière ambiante, comportant un dispositif optique à filtre interférentiel qui subdivise la lumière incidente, constituée par le signal optique ($I_S$) et la lumière ambiante ($I_A$), en deux composantes dont la première ($I_S + I_{AT}$) se situe dans une bande spectrale passante correspondant à la longueur d'onde prédéterminée du signal optique, et dont la seconde ($I_{AR}$) est située dans la bande spectrale inverse de la précédente, et comportant un premier et un second dispositifs photosensibles (2, 3) qui sont disposés de telle sorte qu'ils reçoivent la première et la seconde composantes de lumière délivrées par le dispositif à filtre interférentiel, un élément de circuit (6, figure 1; 17, figure 5) pouvant former un signal de différence (SR) à partir des signaux de sortie (S1, S2) des premier et second dispositifs photosensibles, ainsi que des dispositifs (4, 5, figure 1; 19, figure 5) servant à réaliser l'adaptation du rapport entre les signaux de sortie délivrés par le premier et par le second dispositif photosensible, de telle sorte que dans le signal de différence la partie ($I_{AT}$) due à la lumière ambiante ($I_A$) dans la première composante, est compensée, caractérisé en ce que
– le dispositif à filtre interférentiel est constitué par un seul filtre interférentiel (1) par lequel d'une part la lumière transmise ($I_S$, $I_{AT}$) en tant que première composante et d'autre part la lumière réfléchie ($I_{AR}$) en tant que seconde composante sont envoyées aux deux dispositifs photosensibles (2, 3), et
– un dispositif à filtre (5) est prévu entre le filtre interférentiel (1) et le second élément photosensible (3) de telle sorte que l'on obtient, comme signal de sortie du second dispositif photosensible (3), un signal qui correspond à une plage spectrale limitée de façon étroite (figure 3D), qui englobe une ou deux des régions directement voisines de la bande spectrale passante du filtre interférentiel.

2. Dispositif suivant la revendication 1, caractérisé en ce qu'en aval de l'élément de circuit (17) servant à former le signal de différence est branché un circuit de compensation (19) comportant des liaisons de réaction (20, 21) et à l'aide duquel les niveaux des signaux de sortie des dispositifs photosensibles (2, 3) sont adaptés de telle manière que leurs composantes en courant continu et leurs composantes à basse fréquence se compensent.

3. Dispositif suivant la revendication 2, caractérisé par le fait que le circuit de sortie (19) évalue le signal (SR) délivré par l'élément de circuit (17) servant à former le signal de différence et que des signaux de commande sont délivrés par l'intermédiaire de liaisons de réaction (20, 21) à deux amplificateurs d'entrée (15, 16) séparés de l'élément de circuit servant à former le signal de différence, auxquels sont envoyés d'autre part les signaux de sortie (S1, S2) des deux dispositifs photosensibles (2, 3).

0012818

FIG. 1

FIG. 2

9

0 012 818

SPEKTRAL-
DICHTE

FIG. 3A

$I_A$

$I_S$

900 n m  $\lambda$

FILTER-
CHARAKT.

FIG. 3C

F1
TRANSM.

900 n m  $\lambda$

SPEKTRAL-
DICHTE

FIG. 3B

$I_{AT}$

$I'_{AR}$

$I_S$

900 n m  $\lambda$

FILTER-
CHARAKT.

FIG. 3D

F2
TRANSM.

F1
REFL.

900 n m  $\lambda$

FIG. 3

$+ V_C$    $- V_C$

D1  2    3  D2

$i_1$    $i_2$

FIG. 4

11    8    10    SR    12

9    $\Delta i$

11

FIG.5

FIG.6

FIG.7

DOKUMENT